# EUROPEAN PATENT SPECIFICATION

(11) **EP 2 109 520 B1**
(45) Date of publication and mention of the grant of the patent: **22.02.2017**
(21) Application number: 07709315.1
(22) Date of filing: 05.02.2007
(51) Int. Cl.: B25F 5/00, A01D 34/90, B27B 17/00, B23D 47/00

(54) **ANTI -VIBRATION ARRANGEMENT FOR A HAND-HELD MOTOR-DRIVEN TOOL**
SCHWINGUNGSUNTERDRÜCKUNGSANORDNUNG FÜR EIN MOTORBETRIEBENES HANDWERKZEUG
MÉCANISME ANTI-VIBRATION POUR OUTIL MÉCANIQUE TENU À LA MAIN

(43) Date of publication of application: 21.10.2009
(60) Divisional application: 11151630.8
(73) Proprietor: Husqvarna AB, 561 82 Huskvarna (SE)
(72) Inventor: WÄHRBORG, Fredrik, S-566 35 Habo (SE); WÜRSIG, Lars, S-561 32 Huskvarna (SE)
(86) International application number: PCT/SE2007/000099
(87) International publication number: WO 2008/097138

(56) References cited:
- EP-A1- 0 294 842
- EP-A1- 1 530 890
- US-A- 3 581 832
- US-A1- 2002 073 558
- US-A1- 2006 000 438

## Description

### Technical Field

The present disclosure relates to an anti-vibration arrangement of a hand-held motor-driven tool, and especially to an anti-vibration arrangement for isolating a handle portion from a vibration-propagating portion of a hand-held motor-driven tool.

### Background

When using a hand-held motor-driven tool, such as a chain saw, clearing saw, brush cutter, trimmer or a cut-off machine, vibrations originating from e.g. the motor and/or the saw blade are propagating in the tool. To significantly reduce the propagation of the vibrations into a handle portion of the tool and further to the user of the tool, which is uncomfortable for the user of the tool and which could be hazardous to the user, a tool can be provided with anti-vibration elements for absorbing vibrations. The anti-vibration elements are arranged between the handle portion and the vibration-propagating portion such that the handle portion is isolated from the vibration-propagating portion.

Traditionally, for the hand-held motor-driven tools mentioned above, there are two anti-vibration elements arranged in a front portion and two anti-vibration elements arranged in a back portion of a handle portion of the tool, between the vibration-propagating portion and the handle portion of the tool. To achieve a good vibration-isolating factor between the vibration-propagating portion and the handle portion, relatively weak anti-vibration elements are needed. An anti-vibration element is normally realized by a coil spring or a rubber element.

US2006000438A1 discloses a manually guided implement embodied as a chain saw. An anti-vibration element is used to connect a handle of the chain saw to the housing.

EP 0294842A1 discloses a vibration -damping control handle connected to a shaft portion of a portable power tool and provided with an elastomeric element and a coil conical spring which is coaxially circumscribes the tool shaft and cantilevered relative the smaller diameters coils.

US2002073558A1 discloses a chain saw with vibration-isolating devices.

US3581832A1 discloses a free-cutting device with a tubular member to which a handle means is connected through at least one vibration-damping bearing.

If coil springs are used, a means for limiting deflection of the spring is needed such that the coil springs are not plastically deformed when the springs are exposed to high static loads. At high static loads, the means for limiting deflection of the spring will come into contact with the handle portion, resulting in a considerably higher vibration level in the handle portion.

If rubber elements are used, the nature of the rubber elements make them function as both an anti-vibration element and a means for limiting deflection of an anti-vibration element. With the anti-vibration arrangements of today, comprising such rubber elements, a compromise has to be taken between stiffness of the rubber elements for limiting deflection of the element, and weakness of the rubber elements for achieving a high degree of vibration isolation.

Due to for example these reasons, the anti-vibration arrangements of today do not have optimal vibration isolation characteristics.

### Summary

An object of the invention is to provide an anti-vibration arrangement of a hand-held motor-driven tool, for isolating a handle portion from a vibration-propagating portion of the tool, which anti-vibration arrangement has good vibration isolation characteristics.

This is achieved according to a first aspect of the invention by arranging an anti-vibration arrangement with a force-receiving element arranged between the handle portion and the vibration-propagating portion according to the preamble of claim 1 , wherein for receiving a force related to a gravitational force related to the weight of the vibration-propagating portion, acting on the vibration-propagating portion; the force-receiving element is arranged on the tool such that it has a substantial extension along its own longitudinal axis in a direction substantially perpendicular to the longitudinal axis of the vibration-propagating portion, and which force-receiving element thereby is arranged for substantially unloading the at least one anti-vibration element from the gravitational force acting on the vibration-propagating portion, as defined in the characterizing part of claim 1 .

In prior art anti-vibration arrangements; the weight of the vibration-propagating portion has loaded the anti-vibration elements. Therefore, a compromise has been required between stiffness of the anti-vibration elements for coping with the weight of the vibration-propagating portion and weakness of the elements for achieving a high degree of isolation of the handle portion from vibrations from the vibration-propagating portion. By arranging a separate element for receiving the force related to the weight of the vibration-propagating portion, as in claim 1 of the present invention, there will be no such load on the anti-vibration elements. As a result, the anti-vibration elements can be more optimally constructed for isolating the handle portion from vibrations from the vibration-propagating portion. I.e. the anti-vibration elements can be weaker constructed in the direction of the gravitational force acting on the vibration-propagating portion.

According to claim 2, the force-receiving element is adjusted to the direction of the force originating from the weight of the tool, such that the anti-vibration elements are unloaded from the weight of the vibration-propagating portion also when the tool is tilted, the first end is loosely attached to the vibration-propagating portion and/or the second end is loosely attached to the handle portion. Thereby, the force-receiving element will automatically release its attachment with either the vibrating-propagating portion or the handle portion if the handle portion is disassembled from the vibration-propagating portion, and the handle portion can be disassembled from the vibration-propagating portion without risking damaging the force-receiving element.According to an embodiment of the invention, the anti-vibration element has a first part with a low stiffness and at least one second part with a stiffness higher than the first part. They are arranged such that the first part mainly isolate vibrations resulting from low static load and the at least one second part mainly isolate vibrations resulting from static load higher than the low static load. Thereby, an anti-vibration element is created with very good vibration isolation characteristics, which both functions as an anti-vibration element and as a device for limiting deflection of the element. By having an anti-vibration element with a number of parts, each part receiving a different amount of load, a transition between different loads will not be felt as uncomfortable by a user. The more parts that are used in the anti-vibration element, the less will a transition from one part to the next part of the anti-vibration element be observed by the user. The element according to this embodiment is especially useful when used together with the force-receiving element of the invention, since the force-receiving element makes it possible to have an extra low stiffness of the first part.

According to another embodiment of the invention, the anti-vibration element is adapted for isolating the handle portion from vibrational movements in a direction parallel to a longitudinal axis of the vibration-propagating portion. Thereby, an anti-vibration element with high vibration isolation characteristics is achieved. The anti-vibration element is advantageously arranged with a first part with low stiffness and at least one second part with a stiffness higher than the first part, such that the element receives vibrations in a number of steps.

According to a second aspect of the invention, the object of the invention is achieved by an anti-vibration arrangement that is adapted for isolating the handle portion from movements in a direction parallel to a longitudinal axis of the vibration-propagating portion, movements that occur due to the vibrations originating from the vibration-propagating portion.

It has been observed that the vibrations in a vibration-propagating portion may give rise to movements in the vibration-propagating portion in the direction of the longitudinal axis of the vibration-propagating portion, due to a rotating movement of a holder of the anti-vibration elements, i.e. of a protruding device of a tube-shaped portion for housing a drive shaft. This is especially true if the vibrations give rise to a mode shape that has a node at the point of the vibration-propagating portion where a holder for an anti-vibration element is situated. Therefore, by arranging the anti-vibration arrangement such that it is adapted for isolating the handle portion also from such movements in the vibration-propagating portion, an anti-vibration arrangement with better vibration isolation characteristics is achieved compared to prior art anti-vibration arrangements.

Either a separate anti-vibration element or an embodiment of the already existing anti-vibration element may be adapted for isolating the handle portion from movements of the vibration-propagating portion in the direction of the longitudinal axis of the vibration-propagating portion.

According to an embodiment, the geometry of the anti-vibration arrangement is adapted such that it isolates from movements of the vibration-propagating portion in a direction parallel to a longitudinal axis of the vibration-propagating portion. By having a solution where the geometry of the anti-vibration element is adapted, and not e.g. a choice of material, it will be possible to form a cost-effective arrangement with good vibration isolation characteristics.

According to an embodiment, the anti-vibration arrangement is arranged such that it is adapted for isolating the handle portion from movements in a direction parallel to the longitudinal axis of the vibration-propagating portion by having an anti-vibration element with a first part with low stiffness and a second part with high stiffness in the direction parallel to the longitudinal axis. As a result, a vibration element is achieved that has a good function for isolating for vibrations in this direction at both low and high static load, and which at the same time functions as a device for limiting the deflection of the anti-vibration element.

According to another embodiment of the second aspect of the invention, the second part is arranged coaxially around the first part. Thereby, the anti-vibration element is arranged for isolating vibrations in any possible direction, i.e. in x, y and z direction.

According to another embodiment of the second aspect of the invention, the anti-vibration arrangement also comprises a force-receiving element adapted for receiving the weight of the vibration-propagating portion. Thereby, the anti-vibration elements can be constructed with weak first portions such that a good vibration isolation characteristic is achieved.

According to a third aspect of the invention, the object of the invention is achieved by an anti-vibration arrangement comprising an anti-vibration element that has a first part with a low stiffness for isolating vibrations resulting from an exposure to a low static load and at least one second part with a higher stiffness than the first part for isolating vibrations resulting from an exposure to a static load higher than the low static load.

Thereby, an anti-vibration element is created with very good vibration isolation characteristics, which both functions as an anti-vibration element and as a device for limiting deflection of the element. By having an anti-vibration element with a number of parts, each part receiving a different amount of load, a transition between different loads will not be felt as uncomfortable by a user. The more parts that are used in the anti-vibration element, the less will a transition from one part to the next part of the anti-vibration element be observed by the user. Also, a high degree of vibration isolation could be achieved with such a solution, without the tool giving the user a "flabby" feeling caused by too soft connection between the handle portion and the vibration-propagating portion.

According to an embodiment of this aspect of the invention, the anti-vibration element is further adapted for isolating the handle portion from vibrational movements in a direction parallel to a longitudinal axis of the vibration-propagating portion. Thereby, an anti-vibration element with high vibration isolation characteristics also for vibrations in this direction is achieved.

According to another embodiment of this aspect of the invention, the anti-vibration arrangement also comprises a force-receiving element adapted for receiving the weight of the vibration-propagating portion. The force-receiving element makes it possible to have an extra low stiffness of the first part of the anti-vibration element, since the first part does not have to be arranged to carry the weight of the vibration-propagating portion.

The anti-vibration elements used in the embodiments of the invention is preferably made from rubber or a rubber-like material, since such a material makes it possible to achieve an element with a good vibration isolation characteristics.

According to a fourth aspect of the invention, a hand-held motor-driven tool is claimed, comprising a handle portion and a vibration-propagating portion and an anti-vibration arrangement according to any of the embodiments of the invention, which anti-vibration arrangement is arranged between the handle portion and the vibration-propagating portion of the tool.

The hand-held motor-driven tool is preferably any kind of hand-held motor-driven tool wherein a relatively long drive shaft is provided for transmitting movement from a drive motor to a driven work tool, e.g. a rotatable work tool, and wherein a handle portion is arranged via an anti-vibration arrangement to a vibration-propagating portion comprising the drive motor, the drive shaft, the work tool and a tube shaped portion for housing the drive shaft. Such a hand-held motor-driven tool may be for example a brush cutter, a pole chain saw, a trimmer such as a pole hedge trimmer, an edge cutter or a clearing saw.

### Brief Description of the Drawings

The invention will in the following be described in more detail with reference to the enclosed drawings, wherein:
Figure 1 shows a perspective view of a clearing saw for which the invention may be used.
Figure 2 shows a perspective view of an embodiment of an anti-vibration arrangement according to the invention arranged on a tube-shaped portion of a tool before the arrangement is inserted into a handle portion of the tool.
Figure 3 shows a side view of an embodiment of the invention inserted into a handle portion of a tool.
Figure 4 shows a front view of an anti-vibration element according to the invention.
Figure 5 shows a cross-sectional view in section I-I of the anti-vibration element shown in figure 4.

### Description of Embodiments

The present invention will be described more fully hereinafter with reference to the accompanying drawings, in which preferred embodiments of the invention are shown. This invention may, however, be embodied in many different forms and should not be construed as limited to the embodiments set forth herein; rather, these embodiments are provided so that this disclosure will be thorough and complete, and will fully convey the scope of the invention to those skilled in the art. In the drawings, like numbers refer to like elements.

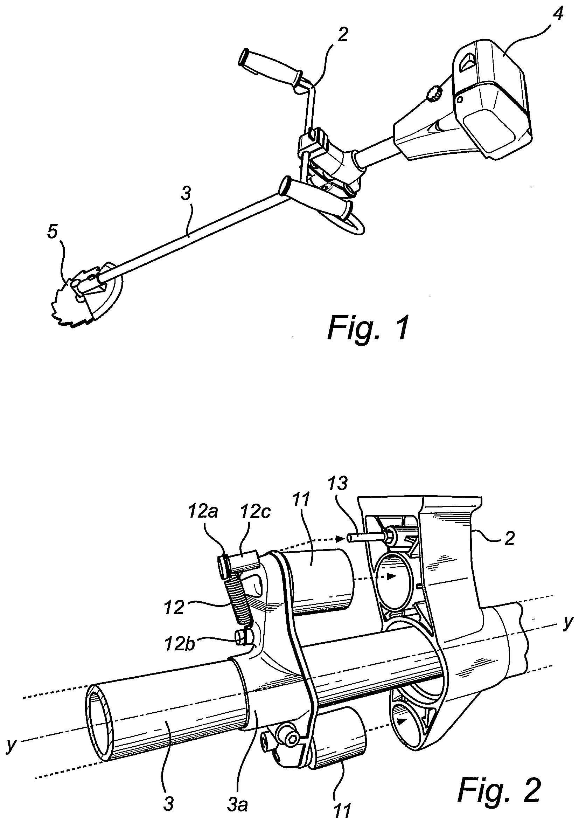

Figure 1 shows a clearing saw, which is an example of a hand-held motor-driven tool for which the present invention may be used. The clearing saw comprises a handle 2, a motor (not shown) inside a motor housing 4, a rotatable work tool 5 in shape of a circular sawblade and a tube-shaped portion 3. The tube-shaped portion 3 houses a drive shaft, which connects the motor to the rotatable work tool 5. The tool, i.e. the tube-shaped portion 3 and the drive shaft, has a longitudinal axis Y. The drive shaft is arranged to transfer a rotational movement produced by the motor to the rotatable work tool 5. Vibrations originating from the motor or the rotatable work tool 5 may propagate into other parts of the tool, such as the tube-shaped portion 3.

In order to avoid that such vibrations propagate into a handle portion of the tool, the handle 2 is connected via an anti-vibration arrangement to the tube-shaped portion 3. Similarly, to avoid that such vibrations propagate into the motor housing 4, the motor housing 4 is connected to a vibration-propagating part inside the motor housing via a similar anti-vibration arrangement. In the embodiment of figure 1, the handle 2 and the motor housing 4 are connected, and constitutes a handle portion that is isolated from vibrations from a part of the tool, called a vibration-propagating portion of the tool, comprising motor, drive shaft, tube-shaped portion 3 and work tool 5.

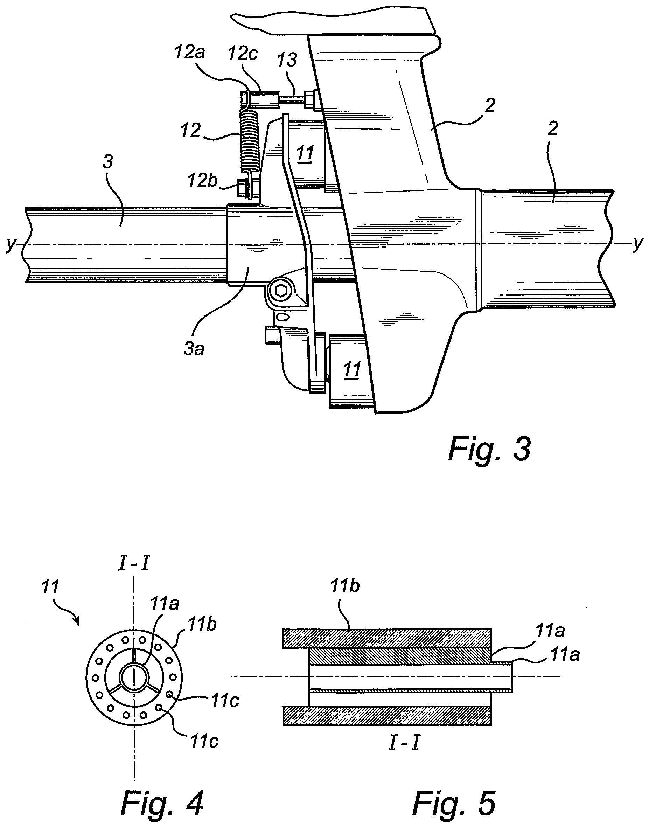

Figures 2 and 3 show an embodiment of the anti-vibration arrangement of the invention attached to a tool, such as the tool shown in figure 1. To the tube-shaped portion 3 is associated a protruding device 3a for connecting two anti-vibration elements 11 to the vibration-propagating portion illustrated by the tube-shaped portion 3. The protruding device 3a may either be fixedly arranged at the tube-shaped portion 3, e.g. as an integrated part of the tube-shaped portion 3, or it may be a separate part arranged at the tube-shaped portion by an attachment element such as a screw. The protruding device shown in figures 2 and 3 surrounds a periphery of the tube-shaped portion. To the protruding device 3a are the two anti-vibration elements 11 connected, preferably at opposite sides of the tube-shaped portion. Each anti-vibration element 11 is connected at a first end to the protruding device 3a and at a second end to the handle portion 2, preferably such that their longitudinal axis is substantially parallel to the longitudinal axis Y of the tube-shaped portion 3.

The anti-vibration arrangement also comprises a force-receiving element 12, provided by a coil spring. The spring 12 has a first end 12b attached to the protruding device 3a of the tube-shaped portion 3, and a second end 12a attached to the handle portion 2 via a sleeve 12c and a pin 13. The purpose with the spring 12 is to receive a gravitational force related to the weight of the vibration-propagating portion. For this purpose, the spring 12 is arranged between the handle portion 2 and the tube-shaped portion 3, such that it has a longitudinal extension in a substantially vertical direction when the tool is in a normal horizontal working position. By such an arrangement, the anti-vibration elements 11 do not have to be stiff enough to carry the weight of the vibration-propagating portion. Instead, the anti-vibration elements 11 could be better adapted for isolating the handle portion 2 from vibrations in the tube-shaped portion 3.

The force-receiving element 12 is arranged for receiving a force in its longitudinal extension, but the force-receiving element preferably has a very low stiffness in other directions.

As mentioned above, the second end 12a of the spring 12 is attached to the handle portion 2 via a sleeve 12c and a pin 13. The pin 13 is fixedly arranged to the handle portion 2, and the sleeve 12c is arranged to the second end 12a of the spring, e.g. by a snap connection to a loop of the second end 12a. The sleeve 12c is arranged to be loosely connected to the pin 13, by pushing the sleeve 12c onto the pin 13. When the sleeve 12c has been pushed onto the pin 13, the sleeve can relatively freely slide and rotate on the pin. Thereby, the spring will be automatically adjusted to the direction of the gravitational force acting on the tube-shaped portion 3, when the tool is tilted, by the sleeve sliding on the pin. The pin preferably has a cylindrical shape.

Another purpose with the loose connection between the spring and the handle portion is that it will be easy to assemble the protruding device 3a onto the tube-shaped portion 3 and/or the handle portion 2 onto the tool. Also, there is no risk that the spring 12 will be destroyed when disassembling the tool, since the sleeve 12c will only slide off the pin 13 if the handle portion 2 and the protruding device 3a are moved away from each other. In comparison, if the spring 12 would be attached to the handle portion 2 and the protruding device 3a of the tube-shaped portion 3 by attachment elements such as screws, the spring may be destroyed at a disassembling step if the spring is not disassembled from either the handle portion or the protruding device 3a of the tube-shaped portion 3 before the handle portion 2 and the protruding device 3a are moved away from each other.

Alternatively, any kind of loose attachment between the spring 12 and the handle portion 2 may be used. As another alternative, there may be a loose attachment between the spring 12 and the tube-shaped portion 3 or the protruding device 3a, or there may be loose attachments between both the spring 12 and the handle portion 2 and the spring 12 and the tube-shaped portion 3.

The force-receiving element 12 could be any kind of elastic material for receiving the gravitational force acting on the vibration-propagating portion. As an alternative to a spring, such as a coil spring, the force-receiving element could be any device having a stiffness in only one direction, e.g. a string or similar. In one embodiment, the force-receiving element 12 would make the anti-vibration element 11 centre around a pin of the handle portion onto which the anti-vibration element 11 is arranged, when the tool is not in use.

Figures 4 and 5 show an embodiment of an anti-vibration element 11 according to the invention. The anti-vibration element 11 has a first part 11a arranged to be attached to the protruding device 3a and a second part 11b arranged to be attached to the handle portion 2. The second part 11b has a cylindrical shape with a circular cross-section, which encircles the cross-section of the first part 11a, such that the second part is arranged coaxially around the first part. The first part 11a has a first section with a cylindrical shape with a circular cross-section, and a number of second sections extending from the first section with a circular cross section outwards to connect the first part with the second part 11b. The first part 11a has thin dimensions, which results in a low stiffness, with the purpose of isolating vibrations resulting from an exposure to low static loads on the vibration-propagating part. The second part 11b has thicker dimensions than the first part, which results in a higher stiffness, with the purpose of isolating vibrations resulting from an exposure to high static loads on the vibration-propagating part. At low loads, the first part 11a will only be displaced a small distance and vibrations will be isolated by the first part. At higher loads, the first part will be displaced such that the first section comes into contact with the second part 11b. This second part 11b will then function as a vibration isolator for the higher loads and as a device for limiting deflection of the element at the same time. Thereby, an anti-vibration element with very good vibration isolation characteristics is achieved. Also, the second part 11b of the embodiment is equipped with a number of through holes 11c extending in a longitudinal direction of the cylinder-shaped second part 11b. Thereby, the second part will have a first, medium hard stiffness before the holes 11c on one side are compressed and a second, hard stiffness when the holes on one side are compressed.

Alternatively, the anti-vibration element 11 may comprise more than two parts, each part having a different stiffness for receiving vibrations.

The vibrations propagate in the tube-shaped portion 3 with a mode shape described as a sinusoidal-like waveform. It has been observed that the vibrations in the tube-shaped portion 3 may give rise to movements of the tube-shaped portion 3 in the direction of the longitudinal axis Y of the tube-shaped portion, which would give a rotating movement of the protruding device 3a around an axis perpendicular to the longitudinal axis Y. This is especially true if the vibrations give rise to a sinusoidal waveform having a node at the point of the tube-shaped portion where the protruding device is situated. Therefore, by arranging the anti-vibration arrangement such that it is adapted for isolating also movements in the direction of the longitudinal axis Y of the tube-shaped portion, an anti-vibration arrangement with better vibration isolation characteristics is achieved compared to prior art anti-vibration arrangements.

For this reason, an embodiment of the anti-vibration element 11 has a shape in a longitudinal direction as shown in figure 5. The first part 11a of the anti-vibration element 11 is displaced in the longitudinal direction of the anti-vibration element compared to the second part 11b. As mentioned, the first part 11a is connected to the tube shaped portion 3 via the protruding device 3a and the second part 11b is connected to the handle portion 2. At low movements in the direction parallel to the longitudinal axis Y of the tube-shaped portion, the first part 11a with a low stiffness will receive the movements such that the vibrations in this direction will be isolated from the handle portion. At greater movements in the direction parallel to the longitudinal axis Y of the tube-shaped portion, the first part will be pushed in the longitudinal direction such that the second part 11b will come into contact with the protruding device 3a and the movements will be received by the second part 11b instead. Thereby, the anti-vibration element 11 according to this embodiment will receive vibrations in two steps (weak and strong vibrations) both in a direction parallel to the longitudinal axis Y of the tube-shaped portion, due to the displacement of the first part 11a to the second part 11b in the longitudinal direction, and in a direction transversal to the longitudinal axis Y, due to the different cross-sectional dimensions of the first part 11a and the second part 11b.

As an alternative, the anti-vibration arrangement may have a separate second anti-vibration element for isolating the handle portion from movements in the direction parallel to the longitudinal axis Y of the tube-shaped portion.

The anti-vibration element arranged to receive vibrations in a direction parallel to the longitudinal axis of the tube-shaped portion may have more than two parts, each part having a different stiffness for isolating the handle portion from the tube-shaped portion.

In the embodiment of the invention shown in figures 2-3, there are two anti-vibration elements 11 connected to the tube-shaped portion at opposite sides of the tube-shaped portion. Although, there may be only one anti-vibration element as well as more than two anti-vibration elements connected to the tube-shaped portion, either via a protruding device or directly to the tube-shaped portion.

A similar anti-vibration arrangement as described above is with advantage connected between the motor housing 4 and a vibration-propagating portion inside the motor housing, for isolating the motor housing from vibrations in the vibration-propagating portion.

In the drawings and specification, there have been disclosed preferred embodiments and examples of the invention and, although specific terms are employed, they are used in a generic and descriptive sense only and not for the purpose of limitation, the scope of the invention being set forth in the following claims.

## Claims

1. An anti-vibration arrangement for a handheld motor-driven tool, for isolating a handle portion (2) of the tool from a vibration-propagating portion (3) of the tool, which vibration propagating portion comprises a motor, a drive shaft, a tube shaped portion (3) and a work tool (5), wherein the tube-shaped portion houses the drive shaft and wherein the handle portion is connected to the tube-shaped portion via the anti-vibration arrangement, the arrangement comprising:
at least one anti-vibration element (11) arranged between the handle portion (2) and the vibration-propagating portion (3) for isolating the handle portion from vibrations originating from the vibration-propagating portion (3);
the anti-vibration arrangement also comprises a separate force-receiving element (12) arranged between the handle portion (2) and the vibration-propagating portion (3), which force-receiving element (12) is adapted for receiving a force related to the gravitational force related to the weight of the vibration-propagating portion (3), and which force-receiving element (12) thereby is arranged for substantially unloading the at least one anti-vibration element (11) from the gravitational force acting on the vibration-propagating portion (3) **characterized in that** said force-receiving element (12) is a coil spring (12) having a first end (12b) attached to the vibration-propagating portion (3) and a second end (12a) attached to the handle portion (2), wherein the coil spring (12) is arranged on the tool such that it has a substantial extension along its own longitudinal axis in a direction substantially perpendicular to the longitudinal axis (Y) of the vibration-propagating portion.

2. The anti-vibration arrangement according to claim 1, wherein the force-receiving element (12) has a first end (12a) attached to the vibration-propagating portion (3) and a second end (12b) attached to the handle portion (2), and wherein the force-receiving element is arranged to be adjusted to the force related to the gravitational force acting on the vibration-propagating portion (3), also when the tool is tilted,
wherein the first end (12b) is loosely attached to the vibration-propagating portion (3) and/or the second end (12a) is loosely attached to the handle portion (2),
wherein the first end (12b) and/or the second end (12a), has a sleeve (12c), which sleeve is arranged to be pushed onto a pin (13) of the vibration-propagating portion (3) and/or the handle portion (2), for loosely attaching the force-receiving element (12) to the vibration-propagating portion (3) and/or the handle portion (2).

3. The anti-vibration arrangement according to any of claims 1-2, wherein the anti-vibration element (11) has a first part (11a) with a low stiffness for isolating vibrations resulting from an exposure to a low static load and at least one second part (11b) with a higher stiffness than the first part for isolating vibrations resulting from an exposure to static load higher than the low static load.

4. The anti-vibration arrangement according to claim 3, wherein the first part (11a) is arranged to be in contact with the vibration-propagating portion (3) at low and high static loads, and wherein the at least one second part (11b) is arranged to be in contact with the vibration-propagating portion (3) at high static loads.

5. The anti-vibration arrangement according to claim 3 or 4, wherein the at least one second part (11b) is arranged coaxially around the first part (11a).

6. The anti-vibration arrangement according to any of claims 1-5, the anti-vibration arrangement is further adapted for isolating the handle portion from movements in a direction parallel to a longitudinal axis (Y) of the vibration-propagating portion (3), movements that occur due to the vibrations originating from the vibration-propagating portion.

7. The anti-vibration arrangement according to claim 6, wherein the anti-vibration arrangement is adapted for isolating the handle portion from movements in the direction parallel to the longitudinal axis (Y) of the vibration-propagating portion (3) by having a geometry adapted such that the anti-vibration arrangement is flexible in the direction parallel to the longitudinal axis of the vibration-propagating portion (3).

8. The anti-vibration arrangement according to claim 6 or 7, wherein the anti-vibration arrangement is adapted for isolating the handle portion from movements in the direction parallel to the longitudinal axis (Y) of the vibration-propagating portion (3) by having a first part (11a) with a low stiffness for isolating vibrations resulting from an exposure to a low static load and at least one second part (11b) with a higher stiffness than the first part for isolating vibrations resulting from an exposure to static load higher than the low static load.

9. A hand-held motor-driven tool, such as one of a pole chain saw, a clearing saw, a brush cutter, a pole hedge trimmer, an edge trimmer or a cut-off machine comprising a handle portion (2) and a vibration-propagating portion (3), which vibration propagating portion comprises a motor, a drive shaft, a tube shaped portion (3) and a work tool (5), and at least one anti-vibration arrangement according to any of claims 1-8, arranged between the handle portion (2) and the vibration-propagating portion (3).

## Patentansprüche

1. Schwingungsunterdrückungsanordnung für ein motorbetriebenes Handwerkzeug zur Isolierung eines Handgriffabschnitts (2) des Werkzeugs von einem schwingungsweiterleitenden Abschnitt (3) des Werkzeugs, wobei der schwingungsweiterleitende Abschnitt einen Motor, eine Antriebswelle, einen rohrförmigen Abschnitt (3) und ein Arbeitswerkzeug (5) umfasst, wobei der rohrförmige Abschnitt die Antriebswelle beherbergt und wobei der Handgriffabschnitt über die Schwingungsunterdrückungsanordnung verbunden ist, wobei die Anordnung umfasst:
mindestens ein Schwingungsunterdrückungselement (11), das zwischen dem Handgriffabschnitt (2) und dem schwingungsweiterleitenden Abschnitt (3) angeordnet ist, um den Handgriffabschnitt vor Schwingungen zu isolieren, die von dem schwingungsweiterleitenden Abschnitt (3) ausgehen;
wobei die Schwingungsdämpfungsanordnung auch ein separates kraftaufnehmendes Element (12) umfasst, das zwischen dem Handgriffabschnitt (2) und dem schwingungsweiterleitenden Abschnitt (3) angeordnet ist, wobei das kraftaufnehmende Element (12) zum Aufnehmen einer Kraft adaptiert ist, die mit der Gravitationskraft verknüpft ist, die mit dem Gewicht des schwingungsweiterleitenden Abschnitts (3) verknüpft ist, und wobei das kraftaufnehmende Element (12) dadurch zum wesentlichen Entlasten des mindestens einen Schwingungsunterdrückungselements (11) von der Schwerkraft angeordnet ist, die auf den schwingungsweiterleitenden Abschnitt (3) wirkt, **dadurch gekennzeichnet, dass** das kraftaufnehmende Element (12) eine Spiralfeder (12) mit einem ersten Ende (12b), das an dem schwingungsweiterleitenden Abschnitt (3) befestigt ist, und einem zweiten Ende (12a), das an dem Handgriffabschnitt (2) befestigt ist, aufweist, wobei die Spiralfeder (12) so an dem Werkzeug angeordnet ist, dass sie eine wesentliche Ausdehnung entlang ihrer eigenen Längsachse in einer Richtung im Wesentlichen senkrecht zu der Längsachse (Y) des schwingungsweiterleitenden Abschnitt aufweist.

2. Schwingungsunterdrückungsanordnung nach Anspruch 1, wobei das kraftaufnehmende Element (12) ein erstes Ende (12a), das an dem schwingungsweiterleitenden Abschnitt (3) befestigt ist, und ein zweites Ende (12b) aufweist, das an dem Handgriffabschnitt (2) befestigt ist, und wobei das kraftaufnehmende Element so angeordnet ist, dass es der Kraft angepasst wird, die mit der Gravitationskraft verknüpft ist, die auf den schwingungsweiterleitenden Abschnitt (3) einwirkt, auch wenn das Werkzeug gekippt ist,
wobei das erste Ende (12b) lose an dem schwingungsweiterleitenden Abschnitt (3) befestigt ist und/oder das zweite Ende (12a) lose an dem Handgriffabschnitt (2) befestigt ist,
wobei das erste Ende (12b) und/oder das zweite Ende (12a) eine Manschette (12c) aufweist, wobei die Manschette so angeordnet ist, dass sie auf einen Stift (13) des schwingungsweiterleitenden Abschnitts (3) und/oder des Handgriffabschnitts (2) geschoben werden soll, um das kraftaufnehmende Element (12) lose an dem schwingungsweiterleitenden Abschnitt (3) und/oder dem Handgriffsabschnitt (2) zu befestigen.

3. Schwingungsunterdrückungsanordnung nach einem der Ansprüche 1 bis 2, wobei das Schwingungsunterdrückungselement (11) einen ersten Teil (11a) mit einer niedrigen Steifheit zum Isolieren von Schwingungen, die aus einer Einwirkung einer niedrigen statischen Last resultieren, und mindestens einen zweiten Teil (11b) mit einer höheren Steifheit als der erste Teil aufweist, um Schwingungen zu isolieren, die aus einer Einwirkung von statischer Last resultieren, die höher als die niedrige statische Last ist.

4. Schwingungsdämpfungsanordnung nach Anspruch 3, wobei der erste Teil (11a) so angeordnet ist, dass er bei niedrigen und hohen statischen Lasten in Kontakt mit dem schwingungsweiterleitenden Abschnitt (3) ist, und wobei der mindestens eine zweite Teil (11b) so angeordnet ist, dass er bei hohen statischen Lasten in Kontakt mit dem schwingungsweiterleitenden Abschnitt (3) ist.

5. Schwingungsunterdrückungsanordnung nach Anspruch 3 oder 4, wobei der mindestens eine zweite Teil (11b) koaxial um den ersten Teil (11a) herum angeordnet ist.

6. Schwingungsunterdrückungsanordnung nach einem der Ansprüche 1 bis 5, wobei die Schwingungsunterdrückungsanordnung ferner adaptiert ist, um den Handgriffabschnitt vor Bewegungen in einer Richtung parallel zu einer Längsachse (Y) des schwingungsweiterleitenden Abschnitts (3) zu isolieren, Bewegungen, die infolge von Schwingungen auftreten, die von dem schwingungsweiterleitenden Abschnitt ausgehen.

7. Schwingungsunterdrückungsanordnung nach Anspruch 6, wobei die Schwingungsunterdrückungsanordnung adaptiert ist, um den Handgriffabschnitt vor Bewegungen in der Richtung parallel zu der Längsachse (Y) des schwingungsweiterleitenden Abschnitts (3) zu isolieren, indem eine Geometrie so adaptiert wird, dass die Schwingungsunterdrückungsanordnung in der Richtung parallel zu der Längsachse des schwingungsweiterleitenden Abschnitt (3) flexibel ist.

8. Schwingungsunterdrückungsanordnung nach Anspruch 6 oder 7, wobei die Schwingungsunterdrückungsanordnung adaptiert ist, um den Handgriffabschnitt vor Bewegungen in der Richtung parallel zu der Längsachse (Y) des schwingungsweiterleitenden Abschnitts (3) zu isolieren, indem ein erster Teil (11a) mit einer niedrigen Steifheit vorhanden ist, um Schwingungen zu isolieren, die aus einer Einwirkung einer niedrigen statischen Last resultieren, und mindestens ein zweiter Teil (11b) mit einer höheren Steifheit als der erste Teil vorhanden ist, um Schwingungen zu isolieren, die aus einer Einwirkung von statischer Last resultieren, die höher als die niedrige statische Last ist.

9. Motorbetriebenes Handwerkzeug, wie eines von einer Teleskopkettensäge, einer Rodungssäge, einem Buschräumer, einer Teleskopheckenschere, einem Kantentrimmer oder einer Trennschleifmaschine, umfassend einen Handgriffabschnitt (2) und einen schwingungsweiterleitenden Abschnitt (3), wobei der schwingungsweiterleitende Abschnitt einen Motor, eine Antriebswelle, einen rohrförmigen Abschnitt (3) und ein Arbeitswerkzeug (5) umfasst, und mindestens eine Schwingungsunterdrückungsanordnung gemäß einem der Ansprüche 1 bis 8, die zwischen dem Handgriffabschnitt (2) und einem schwingungsweiterleitenden Abschnitt (3) angeordnet ist.

## Revendications

1. Mécanisme anti-vibration pour un outil à moteur tenu à la main, afin d'isoler une partie de poignée (2) de l'outil d'une partie de propagation de vibrations (3) de l'outil, cette partie de propagation de vibrations comprenant un moteur, un arbre d'entraînement, une partie en forme de tube (3) et un outil de travail (5), dans lequel la partie en forme de tube contient l'arbre d'entraînement et dans lequel la partie de poignée est connectée à la partie en forme de tube par l'intermédiaire du mécanisme anti-vibration, le mécanisme comprenant:
au moins un élément anti-vibration (11) agencé entre la partie de poignée (2) et la partie de propagation de vibrations (3) pour isoler la partie de poignée des vibrations provenant de la partie de propagation de vibrations (3);
le mécanisme anti-vibration comprend également un élément de réception de force séparé (12) agencé entre la partie de poignée (2) et la partie de propagation de vibrations (3), cet élément de réception de force (12) étant apte à recevoir une force reliée à la force gravitationnelle attachée au poids de la partie de propagation de vibrations (3), et cet élément de réception de force (12) étant de ce fait agencé de façon à délester sensiblement ledit au moins un élément anti-vibration (11) de la force gravitationnelle agissant sur la partie de propagation de vibration (3), **caractérisé en ce que** ledit élément de réception de force (12) est un ressort hélicoïdal (12) ayant une première extrémité (12b) attachée à la partie de propagation de vibrations (3) et une deuxième extrémité (12a) attachée à la partie de poignée (2), dans lequel le ressort hélicoïdal (12) est agencé sur l'outil de telle manière qu'il présente une extension substantielle le long de son propre axe longitudinal dans une direction sensiblement perpendiculaire à l'axe longitudinal (Y) de la partie de propagation de vibrations.

2. Mécanisme anti-vibration selon la revendication 1, dans lequel l'élément de réception de force (12) présente une première extrémité (12a) attachée à la partie de propagation de vibrations (3) et une deuxième extrémité (12b) attachée à la partie de poignée (2), et dans lequel l'élément de réception de force est agencé de façon à être ajusté à la force reliée à la force gravitationnelle agissant sur la partie de propagation de vibrations (3), également lorsque l'outil est incliné,
dans lequel la première extrémité (12b) est attachée librement à la partie de propagation de vibrations (3) et/ou la deuxième extrémité (12a) est attachée librement à la partie de poignée (2),
dans lequel la première extrémité (12b) et/ou la deuxième extrémité (12a) présente(nt) un manchon (12c), ce manchon étant agencé de façon à être poussé sur une broche (13) de la partie de propagation de vibrations (3) et/ou de la partie de poignée (2), pour attacher librement l'élément de réception de force (12) à la partie de propagation de vibrations (3) et/ou à la partie de poignée (2).

3. Mécanisme anti-vibration selon l'une quelconque des revendications 1 à 2, dans lequel l'élément anti-vibrations (11) comporte une première partie (11a) avec une faible rigidité pour isoler des vibrations résultant d'une exposition à une faible charge statique et au moins une deuxième partie (11b) avec une rigidité plus élevée que la première partie pour isoler des vibrations résultant d'une exposition à une charge statique plus élevée que la faible charge statique.

4. Mécanisme anti-vibration selon la revendication 3, dans lequel la première partie (11a) est agencée de façon à être en contact avec la partie de propagation de vibrations (3) à des charges statiques faibles et élevées, et dans lequel ladite au moins une deuxième partie (11b) est agencée de façon à être en contact avec la partie de propagation de vibrations (3) à des charges statiques élevées.

5. Mécanisme anti-vibration selon la revendication 3 ou 4, dans lequel ladite au moins une deuxième partie (11b) est agencée coaxialement autour de la première partie (11a) .

6. Mécanisme anti-vibration selon l'une quelconque des revendications 1 à 5, dans lequel le mécanisme anti-vibration est en outre apte à isoler la partie de poignée de mouvements dans une direction parallèle à un axe longitudinal (Y) de la partie de propagation de vibrations (3), mouvements qui se produisent en raison de vibrations provenant de la partie de propagation de vibrations.

7. Mécanisme anti-vibration selon la revendication 6, dans lequel le mécanisme anti-vibration est apte à isoler la partie de poignée de mouvements dans la direction parallèle à l'axe longitudinal (Y) de la partie de propagation de vibrations (3) en présentant une géométrie adaptée de telle manière que le mécanisme anti-vibration soit flexible dans la direction parallèle à l'axe longitudinal de la partie de propagation de vibrations (3).

8. Mécanisme anti-vibration selon la revendication 6 ou 7, dans lequel le mécanisme anti-vibration est apte à isoler la partie de poignée de mouvements dans la direction parallèle à l'axe longitudinal (Y) de la partie de propagation de vibrations (3) en présentant une première partie (11a) avec une faible rigidité pour isoler des vibrations résultant d'une exposition à une faible charge statique et au moins une deuxième partie (11b) avec une rigidité plus élevée que la première partie pour isoler des vibrations résultant d'une exposition à une charge statique plus élevée que la faible charge statique.

9. Outil à moteur tenu à la main, tel que tronçonneuse extensible, scie éclaircisseuse, débroussailleuse, taille-haie extensible, coupe-bordure ou machine de tronçonnage comprenant une partie de poignée (2) et une partie de propagation de vibrations (3), cette partie de propagation de vibrations comprenant un moteur, un arbre d'entraînement, une partie en forme de tube (3) et un outil de travail (5), et au moins un mécanisme anti-vibration selon l'une quelconque des revendications 1 à 8, agencé entre la partie de poignée (2) et la partie de propagation de vibrations (3).
